# EUROPÄISCHE PATENTSCHRIFT

(11) **EP 1 088 190 B1**
(45) Veröffentlichungstag und Bekanntmachung des Hinweises auf die Patenterteilung: **19.06.2002**
(21) Anmeldenummer: 99908959.2
(22) Anmeldetag: 12.03.1999
(51) Int. Cl.: F24C 15/16

(54) **BACKOFENROST ODER BACKBLECH**
OVEN RACK OR BAKING TRAY FOR A BAKING OVEN
GRILLE OU PLAQUE DE FOUR DE BOULANGER

(30) Priorität: 13.03.1998 DE 29804533 U
(43) Veröffentlichungstag der Anmeldung: 04.04.2001
(73) Patentinhaber: S & R Maschinenbau Gesellschaft mit beschränkter Haftung, 35315 Homberg/Ohm (OT Büssfeld) (DE)
(72) Erfinder: RÖCKER, Hans, D-35315 Homberg (DE)
(74) Vertreter: Knefel, Cordula, Dipl.-Phys.
(86) Internationale Anmeldenummer: EP9901635
(87) Internationale Veröffentlichungsnummer: WO9947863

(56) Entgegenhaltungen:
- DE-A- 4 023 206
- DE-U- 9 403 451

## Beschreibung

Die Erfindung betrifft einen Backofenrost oder ein Backblech, welches in einem Backofen angeordnet wird.

Zum Stand der Technik gehören Backbleche, die eine vorgegebene Größe aufweisen, also beispielsweise circa 50 Zentimeter oder circa 60 Zentimeter breit sind, was im wesentlichen der gängigen Breite der handelsüblichen Backöfen entspricht. Diese Backbleche sind in der Größe nicht verstellbar, das heißt, die Backbleche passen immer nur in einen Backofen mit einer entsprechenden Breite.

Weiterhin gehören zum Stand der Technik Backofenroste (DE-U-93 18 659), die gitterförmig ausgebildet sind. Diese Backofenroste weisen einen nach unten abgewinkelten Seitenrand auf und werden auf handelsübliche Backbleche gesetzt. Eine Größenverstellung dieser Backofenroste ist ebenfalls nicht vorgesehen.

Zum Stand der Technik gehören auch Backbleche, die in der Breite variabel sind. Bei diesen Blechen ist die Fläche des Bleches unterteilt, und die Flächen der Backbleche sind wenigstens teilweise übereinanderliegend und zueinander verschiebbar angeordnet. Diese Backbleche können in gewissem Maße in der Größe variiert werden. Diese ausziehbaren Backbleche haben aber den Nachteil, daß sie an der Stelle, an der die Teile der Backbleche übereinanderliegen, undicht sind. Darüber hinaus lassen sich diese Backbleche in der Größe nur schwer verstellen, da durch das flächige Aneinanderliegen der beiden Teile der Backbleche die Reibung relativ hoch ist.

Zum Stand der Technik (DE-U 94 03 451) gehören Backbeziehungsweise Bratenbleche, welche auf einem Rahmen aufliegen. Die Ränder der Back- beziehungsweise Bratenbleche können ganz oder teilweise der Querschnittsform der Holme des Rahmens angepaßt sein, so daß sie die Holme teilweise umgreifen. Dadurch kann eine erhöhte Auflagesicherheit der Braten- beziehungsweise Backbleche auf dem Rahmen gewährleistet werden. Der Rahmen ist zur Anpassung an unterschiedliche Herdbreiten mit verstellbaren Querträgern ausgebildet. Der Rahmen weist hierzu zwei parallele Rohre auf, in deren offene Stirnseiten die parallel zueinander verlaufenden Schenkel der Bügel in Längsrichtung der Rohre verschiebbar eingesetzt sind.

Diese zum Stand der Technik gehörende Vorrichtung weist den Nachteil auf, daß Back- oder Bratenbleche, die in dieser Vorrichtung angeordnet werden sollen, einen umlaufenden Rand aufweisen müssen. Für eine erhöhte Auflagesicherheit ist es sogar erforderlich, daß der Rand den Holmen des Rahmens angepaßt ausgebildet ist. Hierdurch lassen sich nur bestimmte Backbleche mit dem Auflagerahmen kombinieren.

Backbleche, welche keinen umlaufenden Rahmen, sondern beispielsweise nur nach unten abgewinkelte Seitenränder aufweisen, sind in Verbindung mit dem zum Stand der Technik gehörenden Auflagerahmen überhaupt nicht einsetzbar.

Darüber hinaus ist der Auflagerahmen, der zum Stand der Technik gehört, relativ material- und damit kostenaufwendig.

Weiterhin gehört zum Stand der Technik (DE-U 88 05 174.9) ein Backblech, welches Umbördelungen des Randes des Backbleches aufweist. In diesen Umbördelungen sind U-förmig ausgebildete Drahtelemente verschiebbar angeordnet, um das Backblech an die jeweiligen Abmessungen der Muffelbreite anzupassen.

Dieses zum Stand der Technik gehörende Backblech hat den Nachteil, daß die U-förmig ausgebildeten Drahtelemente in Umbördelungen des Backbleches angeordnet sind, die fester Bestandteil des Backbleches sind. Das bedeutet, daß die Backbleche schon bei der Herstellung entsprechend mit den Umbördelungen ausgebildet werden müssen, um die Drahtelemente einführen und damit eine Anpassung an die Muffelbreite vornehmen zu können.

Das bedeutet, daß die Werkzeugmaschinen entsprechend für die Herstellung angepaßt und ausgebildet sein müssen. Ein Nachrüsten handelsüblicher Backbleche ist überhaupt nicht möglich.

Darüber hinaus haben die Umbördelungen den Nachteil, daß sie sehr schlecht zu reinigen sind, da die Umbördelungen, die im Prinzip ein schmales Röhrchen bilden, schlecht zugänglich sind. Setzen sich dort Fett oder andere Schmutzpartikel ab, können diese nicht oder kaum entfernt werden.

Das der Erfindung zugrunde liegende technische Problem besteht darin, ein Backblech oder einen Backofenrost anzugeben, der an verschiedene Breiten von Backöfen in einfacher und preiswerter Art und Weise angepaßt werden kann, der einfach sauber zu halten ist, und durch den die Funktion des Backbleches nicht nachteilig beeinflußt wird.

Dieses technische Problem wird durch die Merkmale des Anspruches 1 gelöst.

Dadurch, daß an dem wenigstens einen Seitenrand des Backofenrostes oder des Backbleches wenigstens je eine Klammer lösbar angeordnet ist, und daß an den Klammern jeder Seite ein Schenkel eines Bügels verschiebbar angeordnet ist, ist es möglich, den Bügel im Bereich der Schenkellänge verschiebbar an dem Backblech oder dem Backofenrost anzuordnen. Dadurch, daß die Klammern lösbar angeordnet sind, ist ein Nachrüsten handelsüblicher Backbleche möglich. Der Bügel kann so angeordnet werden, daß die Enden der Schenkel des Bügels in den Klammern angeordnet sind. Dieses ist die Stellung, in der der Bügel am weitesten herausgezogen ist. Der Bügel kann aber auch mit seiner Grundseite in der Nähe des Backofenrostes oder des Backbleches angeordnet werden. Dieses ist die kürzeste Stellung. In sämtlichen Zwischenstellungen und in diesen beiden Endstellungen kann die Länge des Bügels und damit die Gesamtbreite des Backofenrostes oder Backbleches variiert werden, so daß der Backofenrost oder das Backblech in Backöfen verschiedener Breite angeordnet werden kann.

Vorteilhaft ist auf zwei gegenüberliegenden Seiten des Backofenrostes oder des Backbleches je ein Bügel angeordnet. Die Bügel können dann gleichmäßig ausgezogen werden, um eine gleichmäßige Gewichtsverteilung auf dem erfindungsgemäßen Backofenrost oder Backblech zu erhalten. Die Bügel können in diesem Fall auch als Tragegriffe oder Tragehilfen verwendet werden.

Erfindungsgemäß sind die Klammern lösbar an dem Back- - blech oder dem Backofenrost angeordnet. Die Klammern sollen aber schwer lösbar angeordnet sein, damit sie sich nicht ungewollt von dem Backofenrost oder dem Backblech lösen. Hierzu weisen die Klammern erfindungsgemäß Haken auf, die in Durchbrüche der Seitenränder des Backofenrostes greifen. Es können aber auch Vorsprünge oder Rücksprünge vorgesehen sein, in denen Rücksprünge oder Vorsprünge der Seitenränder des Backbleches oder des Backofenrostes angeordnet werden.

Dadurch, daß die Klammern lösbar an dem Backblech oder Backofenrost angeordnet sind, weist die erfindungsgemäße Vorrichtung den Vorteil auf, daß handelsübliche Backbleche oder Backofenroste mit den Klammern und dem Bügel nachgerüstet werden können. Darüber hinaus ist insbesondere für den Reinigungsvorgang das Lösen der Klammern vorteilhaft.

Erfindungsgemäß ist der Bügel mit seinen Schenkeln in wenigstens einer Klammer je einer Seite angeordnet. Es können aber pro Seite auch mehrere Klammern vorgesehen sein. Vorteilhaft sind pro Seite zwei Klammern vorgesehen, um eine optimale Stabilität bei geringst möglichem Aufwand zu erreichen. Der Bügel ist in den Klammern lösbar angeordnet. Dieses ist vorteilhaft, wenn der Backofenrost oder das Backblech gründlich gereinigt werden soll. Die Lösbarkeit soll aber dahingehend eingeschränkt sein, daß sich der Bügel im normalen Gebrauch des Backofenrostes oder Backbleches nicht löst.

Vorteilhaft weisen die Klammern je eine Öse als Aufnahme für den Schenkel des Bügels auf. Die Öse kann geschlossen ausgebildet sein. Es ist aber auch möglich, die Öse offen auszubilden, derart, daß der Schenkel des Bügels in die Öse einschnappt.

Die Schenkel des Bügels können Verdickungen oder Vorsprünge aufweisen, die in entsprechende Ausnehmungen der Öse greifen, so daß der Bügel in bestimmten Längen in die Öse einrastet. Vorteilhaft ist am Ende der Schenkel des Bügels eine Verdickung oder dergleichen vorgesehen, damit der Bügel nicht aus der Öffnung der Öse herausrutscht.

Erfindungsgemäß sind die Öffnungen der Ösen im Querschnitt dem Querschnitt des Bügels angepaßt ausgebildet, damit der Bügel formschlüssig in der Öse angeordnet ist.

Der Bügel ist erfindungsgemäß im Querschnitt rund, oval, rechteckig oder quadratisch ausgebildet. Es ist aber auch möglich, andere Querschnitte vorzusehen.

Vorteilhaft sind der Bügel und/oder die Klammern aus rostfreiem Stahl, insbesondere Chrom-Nickelstahl, wie zum Beispiel VA® oder V2A® ausgebildet. Der Bügel und/oder die Klammern können aber auch aus hitzebeständigem Kunststoff bestehen.

Vorteilhaft sind die Klammern lösbar an dem Backblech oder Backofenrost angeordnet. Dies hat den Vorteil, daß die Klammern und damit der oder die Bügel nachträglich an vorhandenen Backblechen oder Backofenrosten angeordnet werden können.

Darüber hinaus können die Klammern in beliebigen oder fast beliebigen Abständen an dem oder den Seitenrändern des Backbleches oder Backofenrostes angeordnet werden. Dies hat wiederum den Vorteil, daß Bügel mit unterschiedlichen Schenkellängen an dem Backblech oder Backofenrost vorgesehen sein können.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: eine an einem Backofenrost angeordnete erfindungsgemäße Vorrichtung im Schnitt;
- Fig. 2: eine an einem Backblech angeordnete erfindungsgemäße Vorrichtung im Schnitt;
- Fig. 3: eine Draufsicht in Richtung des Pfeiles III der Fig. 1;
- Fig. 4: einen erfindungsgemäßen Bügel in perspektivischer Ansicht;
- Fig. 5: eine erfindungsgemäße Klammer in Ansicht;
- Fig. 6: einen Backofenrost mit Klammern und Bügel in Ansicht;
- Fig. 7: einen Teilschnitt der Fig. 6.

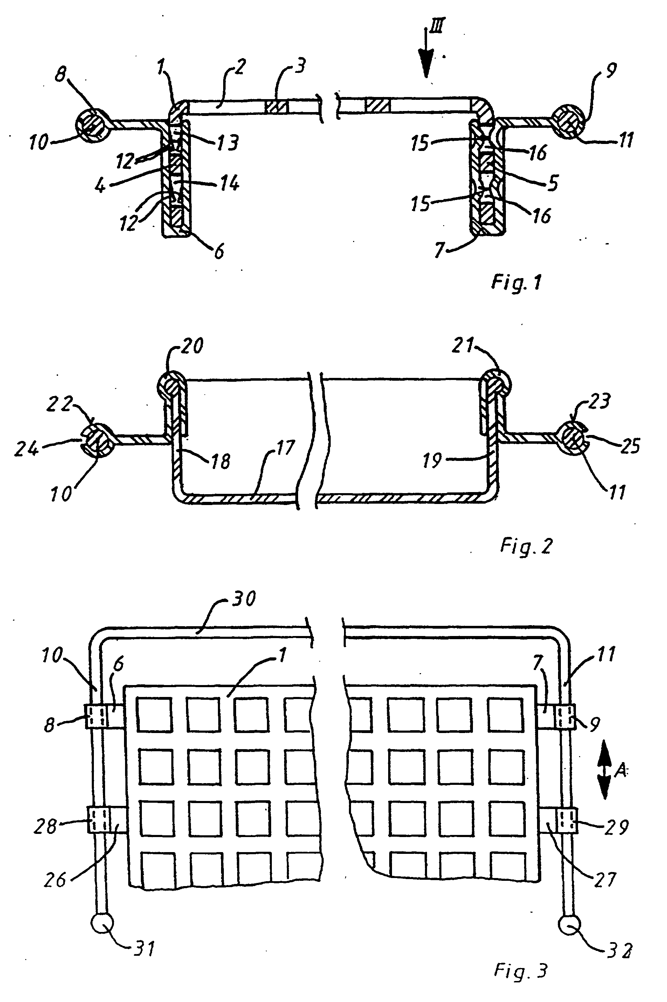

Fig. 1 zeigt einen Backofenrost (1) mit Durchbrüchen (2) und Stegen (3). Der Backofenrost (2) weist an zwei gegenüberliegenden Seiten nach unten abgewinkelte Seitenränder (4, 5) auf. An den Seitenrändern (4, 5) sind Klammern (6, 7) angeordnet, welche Ösen (8, 9) tragen. In den Ösen (8, 9) sind Schenkel (10, 11) eines Bügels (30) (Fig. 3) verschiebbar angeordnet.

Die Klammer (6) weist Haken (12) auf, welche in Durchbrüche (13, 14) des Seitenrandes (4) des Backofenrostes (1) greifen. Die Klammer (7) weist gemäß einer weiteren möglichen Ausführungsform Vorsprünge (15) auf, die in Durchbrüche (16) der Seitenwand (5) des Backofenrostes (1) greifen.

Fig. 2 zeigt ein Backblech (17) mit nach oben abgewinkelten gegenüberliegenden Seitenrändern (18, 19). An den Seitenrändern (18, 19) sind Klammern (20, 21) angeordnet. Die Klammern (20, 21) tragen Ösen (22, 23). Die Ösen (22, 23) weisen Öffnungen (24, 25) auf, durch die die Schenkel (10, 11) des Bügels (30) eingeführt werden können. Die Schenkel (10, 11) sind in Richtung der Zeichenebene verschiebbar in den Ösen (22, 23) der Klammern (20, 21) angeordnet.

Gemäß Fig. 3 sind an dem Backofenrost (1) zusätzlich zu den Klammern (6, 7) weitere Klammern (26, 27) vorgesehen. Die Schenkel (10, 11) werden von den Ösen (8, 9) der Klammern (6, 7) sowie von Ösen (28, 29) der Klammern (26, 27) aufgenommen. Der Bügel (30) ist in Richtung des Pfeiles (A) relativ zu dem Backofenrost verschiebbar. Der Bügel (30) kann mit seinen Schenkeln (10, 11) in den Klammern (6, 7; 26, 27) kontinuierlich verschoben werden. Damit der Bügel (30) mit den Schenkeln (10, 11) nicht aus den Ösen (28, 29) rutscht, weisen die Schenkel (10, 11) Verdickungen (31, 32) an ihren Enden auf, derart, daß die Verdickungen (31, 32) größer als die Öffnungen der Ösen (28, 29) sind.

Dadurch, daß der Bügel (30) in Richtung des Pfeiles (A) verschiebbar ist und dadurch, daß auf der gegenüberliegenden Seite des Backofenrostes (nicht dargestellt) ein weiterer Bügel in Richtung des Pfeiles (A) verschiebbar ist, ist es möglich, den Backofenrost mit den Bügeln (30) derart in der Breite zu verändern, daß der Backofenrost (1) in Backöfen unterschiedlicher Breite angeordnet werden kann.

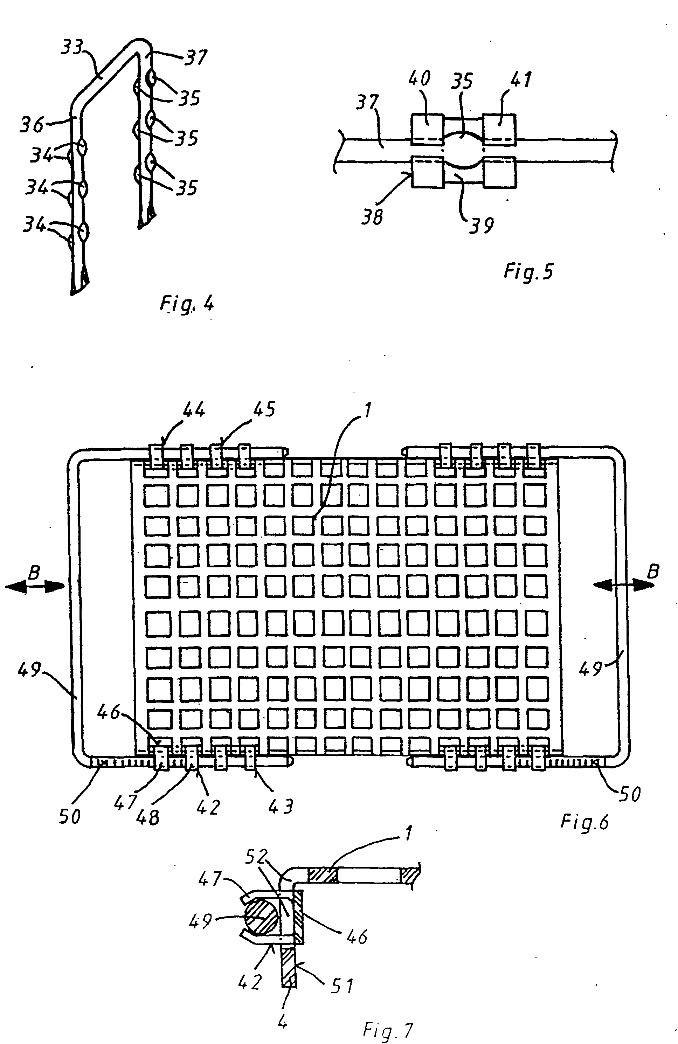

Fig. 4 zeigt einen Bügel (33), dessen Schenkel (36, 37) mit Abstand voneinander angeordnete Vorsprünge (34, 35) aufweisen.

Die Enden der Schenkel (36, 37) weisen einen größeren Querschnitt als die Schenkel (36, 37) auf, um ein Herausrutschen aus den Ösen zu vermeiden.

Gemäß Fig. 5 ist der Schenkel (37) mit seinem Vorsprung (35) in einer Öse (38) angeordnet. Die Öse (38) ist derart ausgebildet, daß der Vorsprung (35) in einem ringförmig ausgebildeten Raum (39) angeordnet ist, während die Öse (38) mit Armen (40, 41) den Schenkel (37) umgreift.

Fig. 6 zeigt den Backofenrost (1) mit Klammern (42, 43, 44, 45). Die Klammer (42) weist eine Grundplatte (46) und zwei Ösen (47, 48) auf, welche offen ausgebildet sind, so daß ein Bügel (49) in die Ösen (47, 48) der Klammer (42) einschnappen kann. Die Klammern (43, 44, 45) sind analog zu der Klammer (42) aufgebaut.

Der Bügel (49) weist eine Markierung (50) auf, um eine exakte Längeneinstellung des Bügels in Richtung des Pfeiles (B) vornehmen zu können.

Gemäß Fig. 7 liegt die Klammer (42) mit ihrer Grundplatte (46) an einer Rückseite (51) des Seitenrandes (4) des Backofenrostes (1) an. Die Öse (47) greift durch einen Durchbruch (52) des Seitenrandes (4) des Backofenrostes (1). Die Grundplatte (46) liegt an den Stegen des Seitenrandes (4) des Backofenrostes (1) an.'Ist der Bügel (49) in den Ösen (47, 48) angeordnet, fixiert der Bügel (49) die Klammer (42) an dem Seitenrand (4) des Backofenrostes (1). Gleichzeitig hält die Klammer (42) den Bügel (30).

### Bezugszahlen

- 1: Backofenrost
- 2: Durchbrüche
- 3: Stege
- 4, 5: Seitenränder
- 6, 7: Klammern
- 8, 9: Ösen
- 10, 11: Schenkel
- 12: Haken
- 13, 14: Durchbrüche
- 15: Vorsprünge
- 16: Durchbrüche
- 17: Blech
- 18, 19: Seitenränder
- 20, 21: Klammern
- 22, 23: Ösen
- 24, 25: Öffnungen
- 26, 27: Klammern
- 28, 29: Ösen
- 30: Bügel
- 31, 32: Verdickungen
- 33: Bügel
- 34, 35: Vorsprünge
- 36: Schenkel
- 37: Schenkel
- 38: Öse
- 39: ringförmiger Raum
- 40, 41: Arme der Öse (38)
- 42, 43, 44, 45: Klammer
- 46: Grundplatte
- 47, 48: Ösen
- 49: Bügel
- 50: Markierung
- 51: Rückseite Seitenrand
- 52: Durchbruch
- A, B: Pfeil

## Patentansprüche

1. Backofenrost oder Backblech mit Seitenrändern, **dadurch gekennzeichnet, daß** an zwei gegenüberliegenden Seitenrändern (4, 5; 18, 19) wenigstens je eine Klammer (6, 7; 20, 21) lösbar angeordnet ist, und daß an dem Backofenrost (1) oder dem Backblech (17) wenigstens ein Bügel (30) angeordnet ist, derart, daß Schenkel (10, 11) des wenigstens einen Bügels (30) in wenigstens je einer der lösbaren Klammern (6, 7; 20, 21) verschiebbar angeordnet sind.

2. Backofenrost oder Backblech nach Anspruch 1, **dadurch gekennzeichnet, daß** der Backofenrost (1) oder das Backblech (17) nach unten oder nach oben abgewinkelte Seitenränder (4, 5; 18, 19) aufweist, an denen wenigstens je eine Klammer (6, 7; 20, 21) lösbar angeordnet ist.

3. Backofenrost oder Backblech nach Anspruch 1, **dadurch gekennzeichnet, daß** die Schenkel (10, 11) des Bügels (30) in wenigstens je einer Klammer (6, 7; 20, 21) lösbar angeordnet sind.

4. Backofenrost oder Backblech nach Anspruch 1, **dadurch gekennzeichnet, daß** der Bügel (30) im wesentlichen U-förmig ausgebildet ist, wobei eine Länge einer Grundseite des Bügels (30) wenigstens annähernd einer Breite des Backofenrostes (1) oder Backbleches (17) entspricht.

5. Backofenrost oder Backblech nach Anspruch 1, **dadurch gekennzeichnet, daß** die wenigstens eine lösbare Klammer (6, 7; 20, 21) wenigstens eine Öse (8, 9; 22, 23) für die Aufnahme der Schenkel (10, 11) des Bügels (30) aufweist.

6. Backofenrost oder Backblech nach Anspruch 5, **dadurch gekennzeichnet, daß** die Ösen (8, 9; 22, 23) wenigstens annähernd dem Querschnitt der Schenkel (10, 11) des Bügels (30) angepaßt ausgebildet sind.

7. Backofenrost oder Backblech nach Anspruch 1, **dadurch gekennzeichnet, daß** die Schenkel (10, 11) des wenigstens einen Bügels (30) formschlüssig in den Ösen (8, 9; 22, 23) angeordnet sind.

8. Backofenrost oder Backblech nach Anspruch 5, **dadurch gekennzeichnet, daß** die Ösen (22, 23) offen ausgebildet sind, derart, daß der Bügel (30) als ein mit den Schenkeln (10, 11) in die Ösen (22, 23) einschnappbarer Bügel (30) ausgebildet ist.

9. Backofenrost oder Backblech nach Anspruch 1, **dadurch gekennzeichnet, daß** die wenigstens eine lösbare Klammer (6, 7) Haken (12) aufweist.

10. Backofenrost oder Backblech nach Anspruch 9, **dadurch gekennzeichnet, daß** die Haken (12) als in Durchbrüche (2) des wenigstens einen nach unten oder oben abgewinkelten Seitenrandes (4, 5) des Backofenrostes (1) oder als hinter Vorsprünge des Seitenrandes des Backbleches (17) greifende Haken ausgebildet sind.

11. Backofenrost oder Backblech nach Anspruch 1, **dadurch gekennzeichnet, daß** die wenigstens eine Klammer (42, 43, 44, 45) eine auf einer Rückseite (51) des Seitenrandes (4) des Backofenrostes (1) angeordnete Platte (46) aufweist, und daß an der Grundplatte (46) wenigstens eine durch je einen Durchbruch (52) des Seitenrandes (4) greifende Öse (47, 48) angeordnet ist.

12. Backofenrost nach Anspruch 11, **dadurch gekennzeichnet, daß** die Ösen (47, 48) offen ausgebildet sind, derart, daß der Bügel (49) als ein mit den Schenkeln in die Ösen (47, 48) einschnappbarer Bügel (49) ausgebildet ist.

13. Backofenrost nach Anspruch 11, **dadurch gekennzeichnet, daß** wenigstens zwei Ösen (47, 48) vorgesehen sind, wobei ein Zwischenraum zwischen den Ösen (47, 48) mindestens eine Breite aufweist, die der Breite eines Steges des Backofenrostes (1) entspricht.

14. Backofenrost oder Backblech nach Anspruch 1, **dadurch gekennzeichnet, daß** der wenigstens eine Bügel (33) als ein mit seinen Schenkeln (36, 37) in unterschiedlichen Längen in den Klammern (20, 21). einrastbarer Bügel (33) ausgebildet ist.

15. Backofenrost oder Backblech nach Anspruch 1, **dadurch gekennzeichnet, daß** die Schenkel (10, 11) des wenigstens einen Bügels (30) als in den Ösen (8, 9) der Klammern (6, 7) kontinuierlich verschiebbare Schenkel (10, 11) ausgebildet sind.

16. Backofenrost oder Backblech nach Anspruch 1, **dadurch gekennzeichnet, daß** der Bügel (30, 33) im Querschnitt rund, oval, rechteckig oder quadratisch ausgebildet ist.

17. Backofenrost oder Backblech nach Anspruch 1, **dadurch gekennzeichnet, daß** die Schenkel (10, 11; 36, 37) an ihren Enden jeweils eine Verdickung (31, 32), ein abgewinkeltes Ende oder einen Aufsatz aufweisen.

18. Backofenrost oder Backblech nach Anspruch 1, **dadurch gekennzeichnet, daß** der wenigstens eine Bügel (30, 31) und/oder die wenigstens eine Klammer (6, 7; 20, 21; 26, 27) aus rostfreiem Stahl, insbesondere Chrom-Nickelstahl, wie zum Beispiel VA® oder V2A® bestehen.

19. Backofenrost oder Backblech nach Anspruch 1, **dadurch gekennzeichnet, daß** der wenigstens eine Bügel (30, 31) und/oder die wenigstens eine Klammer (6, 7; 20, 21; 26, 27) aus hitzebeständigem Kunststoff bestehen.

20. Backofenrost oder Backblech nach Anspruch 1, **dadurch gekennzeichnet, daß** der wenigstens eine Bügel (30) an wenigstens einem Schenkel (10, 11) eine Markierung aufweist.

## Claims

1. An oven rack or baking tray with side walls, **characterised in that** at least one clip (6, 7; 20, 21) is detachably arranged on each of two opposing side walls (4, 5; 18, 19), and **in that** at least one U-shaped member (30) is arranged on the oven rack (1) or the baking tray (17) so that arms (10, 11) of the at least one U-shaped member (30) are each displaceably arranged in at least one of the detachable clips (6, 7; 20, 21).

2. An oven rack or baking tray according to claim 1, **characterised in that** the oven rack (1) or the baking tray (17) has upwardly or downwardly bent side walls (4, 5; 18, 19), on each of which at least one clip (6, 7; 20, 21) is detachably arranged.

3. An oven rack or baking tray according to claim 1, **characterised in that** the arms (10, 11) of the U-shaped member (30) are each detachably arranged in at least one clip (6, 7; 20, 21).

4. An oven rack or baking tray according to claim 1, **characterised in that** the U-shaped member (30) is substantially in the form of a U, the crosspiece of which has a length corresponding at least approximately to a width of the oven rack (1) or baking tray (17).

5. An oven rack or baking tray according to claim 1, **characterised in that** the at least one detachable clip (6, 7; 20, 21) has at least one eye (8, 9; 22, 23) for receiving the arms (10, 11) of the U-shaped member (30).

6. An oven rack or baking tray according to claim 5, **characterised in that** the eyes (8, 9; 22, 23) are adapted at least approximately to the cross-section of the arms (10, 11) of the U-shaped member (30).

7. An oven rack or baking tray according to claim 1, **characterised in that** the arms (10, 11) of the at least one U-shaped member (30) are positively held in the eyes (8, 9; 22, 23).

8. An oven rack or baking tray according to claim 5, **characterised in that** the eyes (22, 23) are of open construction so that the arms (10, 11) of the U-shaped member (30) can snap into the eyes (22, 23).

9. An oven rack or baking tray according to claim 1, **characterised in that** the at least one detachable clip (6, 7) has detents (12).

10. An oven rack or baking tray according to claim 9, **characterised in that** the detents (12) are formed as detents engaging in openings (2) in the at least one upwardly or downwardly bent side wall (4, 5) of the oven rack (1) or as detents engaging behind projections of the side wall of the baking tray (17).

11. An oven rack or baking tray according to claim 1, **characterised in that** the at least one clip (42, 43, 44, 45) has a base (46) arranged on a rear surface (51) of the side wall (4) of the oven rack (1), and **in that** at least one eye (47, 48), each extending through an opening (52) in the side wall (4), is arranged on the base (46).

12. An oven rack according to claim 11, **characterised in that** the eyes (47, 48) are of open construction so that the arms of the U-shaped member (49) can snap into the eyes (47, 48).

13. An oven rack according to claim 11, **characterised in that** at least two eyes (47, 48) are provided, a gap between the eyes (47, 48) being at least of a width corresponding to the width of a bar of the oven rack (1).

14. An oven rack or baking tray according to claim 1, **characterised in that** the arms (36, 37) of the at least one U-shaped member (33) are engageable in the clips (20, 21) at different intervals along their length.

15. An oven rack or baking tray according to claim 1, **characterised in that** the arms (10, 11) of the at least one U-shaped member (30) are continuously displaceable in the eyes (8, 9) of the clips (6, 7).

16. An oven rack or baking tray according to claim 1, **characterised in that** the U-shaped member (30, 33) is round, oval, rectangular or square in cross-section.

17. An oven rack or baking tray according to claim 1, **characterised in that** the ends of the arms (10, 11; 36, 37) are each provided with a thickening (31, 32), a bent end or a cap.

18. An oven rack or baking tray according to claim 1, **characterised in that** the at least one U-shaped member (30, 31 [sic - 33]) and/or the at least one clip (6, 7; 20, 21; 26, 27) comprise stainless steel, in particular nickel chromium steel, e.g. VA® or V2A®.

19. An oven rack or baking tray according to claim 1, **characterised in that** the at least one U-shaped member (30, 31 [sic - 33]) and/or the at least one clip (6, 7; 20, 21; 26, 27) comprise heat-resistant plastic.

20. An oven rack or baking tray according to claim 1, **characterised in that** the at least one U-shaped member (30) has markings on at least one arm (10, 11).

## Revendications

1. Grille pour four ou plaque de four comprenant des bords latéraux, **caractérisée en ce que** sur chacun des deux bords latéraux (4, 5 ; 18, 19) opposés est disposée de manière amovible au moins une pince (6, 7 ; 20, 21) et **en ce qu'**au moins un étrier (30) est disposé contre la grille pour four (1) ou la plaque de four (17), de telle sorte que les branches (10, 11) du au moins un étrier (30) sont disposées de manière à pouvoir coulisser dans au moins une des pinces amovibles (6, 7 ; 20, 21).

2. Grille pour four ou plaque de four selon la revendication 1, **caractérisée en ce que** la grille pour four (1) ou la plaque de four (17) comportent des bords latéraux (4, 5 ; 18, 19) coudés vers le bas ou vers le haut, contre chacun desquels est disposée de manière amovible au moins une pince (6, 7 ; 20, 21).

3. Grille pour four ou plaque de four selon la revendication 1, **caractérisée en ce que** les branches (10, 11) de l'étrier (30) sont disposées chacune de manière amovible dans au moins une des pinces (6, 7 ; 20, 21).

4. Grille pour four ou plaque de four selon la revendication 1, **caractérisée en ce que** l'étrier (30) est sensiblement en forme de U, une longueur d'une traverse de base de l'étrier (30) correspondant au moins approximativement à une largeur de la grille pour four (1) ou plaque de four (17).

5. Grille pour four ou plaque de four selon la revendication 1, **caractérisée en ce que** la au moins une pince amovible (6, 7 ; 20, 21) comporte au moins une boucle (8, 9 ; 22, 23) destinée à recevoir la branche (10, 11) de l'étrier (30).

6. Grille pour four ou plaque de four selon la revendication 5, **caractérisée en ce que** les boucles (8, 9 ; 22, 23) sont conçues de manière adaptée au moins approximativement à la section des branches (10, 11) de l'étrier (30).

7. Grille pour four ou plaque de four selon la revendication 1, **caractérisée en ce que** les branches (10, 11) du au moins un étrier (30) sont logées par conjugaison de forme dans les boucles (8, 9 ; 22, 23).

8. Grille pour four ou plaque de four selon la revendication 5, **caractérisée en ce que** les boucles (22, 23) sont conçues avec un bord ouvert, de telle sorte que l'étrier (30) est conçu sous forme d'étrier (30) pouvant s'emboîter avec les branches (10, 11) dans les boucles (22, 23).

9. Grille pour four ou plaque de four selon la revendication 1, **caractérisée en ce que** la au moins une pince (6, 7) est munie de crochets (12).

10. Grille pour four ou plaque de four selon la revendication 9, **caractérisée en ce que** les crochets (12) sont conçus sous forme de crochets entrant en prise dans des ajours (2) du au moins un bord latéral (4, 5) coudé vers le bas ou vers le haut de la grille pour four (1) ou entrant en prise derrière des saillies du bord latéral de la plaque de four (17).

11. Grille pour four ou plaque de four selon la revendication 1, **caractérisée en ce que** la au moins une pince (42, 43, 44, 45) comporte une base (46) disposée sur une face arrière (51) du bord latéral (4) de la grille pour four (1), et **en ce qu'**au moins une boucle (47, 48), qui s'engage à travers un ajour (52) du bord latéral (4), est disposée sur la base (46).

12. Grille pour four selon la revendication 11, **caractérisée en ce que** les boucles (47, 48) sont conçues avec un bord ouvert, de telle sorte que l'étrier (49) est conçu sous forme d'étrier (49) pouvant s'emboîter avec ses branches dans les boucles (47, 48).

13. Grille pour four selon la revendication 11, **caractérisée en ce qu'**il est prévu au moins deux boucles (47, 48), un espace situé entre les boucles (47, 48) ayant au moins une largeur égale à la largeur d'une traverse de la grille pour four (1).

14. Grille pour four ou plaque de four selon la revendication 1, **caractérisée en ce que** le au moins un étrier (33) est conçu sous forme d'étrier (33) pouvant s'emboîter avec ses branches (36, 37) dans les pinces (20, 21) sur différentes longueurs.

15. Grille pour four ou plaque de four selon la revendication 1, **caractérisée en ce que** les branches (10, 11) du au moins un étrier (30) sont conçues sous forme de branches (10, 11) pouvant coulisser en continu dans les boucles (8, 9) des pinces (6, 7).

16. Grille pour four ou plaque de four selon la revendication 1, **caractérisée en ce que** l'étrier (30, 33) est conçu avec une section ronde, ovale, rectangulaire ou carrée.

17. Grille pour four ou plaque de four selon la revendication 1, **caractérisée en ce que** les branches (10, 11 ; 36, 37) comportent sur chacune de leurs extrémités un renflement (31, 32), une extrémité coudée ou une saillie.

18. Grille pour four ou plaque de four selon la revendication 1, **caractérisée en ce que** le au moins un étrier (30, 31) et/ou la au moins une pince (6, 7 ; 20, 21 ; 26, 27) sont en acier inoxydable, en particulier un acier au chrome et nickel, tel que VA® ou V2A®, par exemple.

19. Grille pour four ou plaque de four selon la revendication 1, **caractérisée en ce que** le au moins un étrier (30, 31) et/ou la au moins une pince sont en matière plastique résistant à la chaleur.

20. Grille pour four ou plaque de four selon la revendication 1, **caractérisée en ce que** le au moins un étrier (30) comporte un repère sur la au moins une branche (10, 11).
